(19) Europäisches Patentamt

European Patent Office

Office européen des brevets

(11) Publication number: **0 275 946 B1**

# EUROPEAN PATENT SPECIFICATION

(45) Date of publication of patent specification: 09.06.93

(51) Int. Cl.⁵: **A23K 1/14**, A23K 1/16, A23K 1/18

(21) Application number: **88100554.0**

(22) Date of filing: **16.01.88**

The file contains technical information submitted after the application was filed and not included in this specification

(54) **Veterinary composition for preventing diarrhoea in animals.**

(30) Priority: **19.01.87 JP 8186/87**
**15.12.87 JP 315092/87**

(43) Date of publication of application:
**27.07.88 Bulletin 88/30**

(45) Publication of the grant of the patent:
**09.06.93 Bulletin 93/23**

(84) Designated Contracting States:
**DE FR GB**

(56) References cited:
EP-A- 0 058 651          FR-A- 2 324 312
FR-A- 2 502 905         GB-A- 2 031 258
US-A- 3 873 733         US-A- 3 904 768
US-A- 4 059 695

PATENT ABSTRACTS OF JAPAN, vol. 4, no. 151 (C-28)[633], 23rd October 1980, page 150 C 28; & JP-A-55 99 153 (TOSHIYUKI OOTA) 28-07-1980

Rasic and Kurmann: Yoghurt, Vol. 1, 1978, p. 362

(73) Proprietor: **NISSHIN FLOUR MILLING CO., LTD.**
**19-12, Nihonbashi-koami-cho**
**Chuo-ku, Tokyo 103(JP)**

(72) Inventor: **Shibata, Kenji**
**Kawagoe Village 3-103 894-2, Kozutsumi**
**Kawagoe-shi Saitama-ken(JP)**
Inventor: **Ozima, Masami**
**32-13, Ohaza-Omote Kawashima-machi**
**Hiki-gun Saitama-ken(JP)**
Inventor: **Hasegawa, Takeaki**
**25-5, Arajuku-machi 6-chome**
**Kawagoe-shi Saitama-ken(JP)**

(74) Representative: **Türk, Gille, Hrabal, Leifert**
**Brucknerstrasse 20**
**W-4000 Düsseldorf 13 (DE)**

**Description**

This invention relates to veterinary compositions for preventing diarrhea in animals which is used alone or in admixture with water or with a base feed stuff.

In the breeding of animals, there are problems such as the frequent occurrence of diarrhea and other diseases. In general, there has been supplied to animals an antibiotic or a feed stuff containing an antibiotic to avoid those diseases. However, in such cases, it has been fairly difficult to prevent such diseases. Further, the application of a large quantity of the antibiotics to animals causes the remaining of the antibiotics in the body, eggs, milk and the like of animals. The remaining antibiotics bring harmful influences on people who take meats, eggs and milk containing the antibiotics to produce sometimes anti-drugs bacilli in the bodies of the people.

EP-A-0 058 651 describes a method of processing cattle-feed products. Different agricultural materials, such as sugar beet pulp, citrus fruit pulp and material obtained by fermentating of agricultural material are heated and desintegrated to achieve products which are used as cattle feed, having a highly nourishing effect.

GB-A-2 031 258 describes food supplements for animals which act as a highly desirable tonic for animals. The food supplements are based on vinegar and sugar based substances.

From US-A-3 873 733 carbohydrate materials are known which are valuable as a protein substitute in ruminant feeding, and as a slow-release fertilizer for growing plants. This ruminant feed may contain different pulps and molasses.

Now, we have found a safe veterinary composition for animals which is based on natural materials and can prevent the frequent occurrence of diarrhea of animals.

Therefore, it is an object of the present invention to provide a veterinary composition for animals which is based on safe natural materials and which can step up the growth of the animals by the prevention of the frequent occurrence of diarrhea of animals. A further object is to provide a veterinary composition favored by animals. Another object is to provide a a veterinary composition for animals being safe for people who take meats, eggs and milks of the animals.

The present invention relates to a veterinary composition for preventing diarrhea in animals, which comprises

(A) at least one selected from the group consisting of a vinegar, a dried powder of the flesh of mume (Japanese apricot) fruit, a dried powder of oranges, a dried powder of tomatoes and a dried powder of strawberries, and
(B) saccharides alone or a combination of saccharides with one or more edible organic acids.

Further, the present invention relates to a veterinary composition for preventing diarrhea in animals, which comprises

(A) at least one selected from the group consisting of a vinegar, a dried powder of the flesh of a mume (Japanese apricot) fruit, a dried powder of oranges, a dried powder of tomatoes and a dried powder of strawberries,
(B) saccharides alone or a combination of saccharides with one or more edible organic acids and
(C) Lactobacillus bifidus.

Still further, the present invention relates to the use of a mixture which comprises

(A) at least one selected from the group consisting of a vinegar, a dried powder of the flesh of a mume (Japanese apricot) fruit, a dried powder of oranges, a dried powder of tomatoes and a dried powder of strawberries, and
(B) saccharides alone or a combination of saccharides with one or more edible organic acids

for the preparation of veterinary compositions for preventing diarrhea in animals.

The veterinary composition of the present invention may be fed to animals such as domestic animals, e.g. cattle, horse, pig, sheep and goat; poultries, e.g. hen, cock, chicken, turkey, duck, guinea fowl and quail; pets, e.g. dog and cat; fishes, e.g. yellowtail, horse mackerel, flat fish, sea bream, red sea bream, eel, carp, rainbow trout, sweet fish and tilapia.

In the present invention, both of a fermented vinegar and a synthesized vinegar may be used as the vinegar in component (A). A fermented vinegar, which, e.g., includes rice vinegar, molt vinegar, alcohol vinegar, cider vinegar or wine vinegar, is preferable.

Both of liquid and solid vinegars may be used. A powdery vinegar is more preferable in the view point of easy handling and easy feeding to animals.

The flesh of Japanese apricot used in said component (A) is used in the form of a dried powder. The flesh of Japanese apricot may be one previously salted or dipped in alcohol.

The oranges, tomatoes and strawberrys are used in the form of dried powder.

2

Further, a powdery rind of oranges may be used. As the oranges, there may be used, e.g., lemons, satsuma mandarins, oranges and citron fruits.

The vinegars, flesh of Japanese apricot, oranges, tomatoes and strawberrys may be used alone or in admixture of two or more of then. They provide the composition of the present invention with a good taste to make the animals take the composition readily. Especially, vinegars and the flesh of the Japanese apricot are preferable, and they may be used alone or in combination of them.

In the present invention, as the saccharides in said component (B), there may be used, e.g., sugar, glucose, lactose and fruit sugar, which may be used alone or in combination of them. Especially, sugar and glucose are preferable in view of the animal's favorite.

As edible organic acid in said component (B), any of animal-edible organic acids may be used. As examples of them, there may be used carboxylic acids such as citric acid, malic acid, fumaric acid, formic acid, succinic acid, tartaric acid and lactic acid, which may be used alone or in combination of them. Among of them, citric acid, fumaric acid and lactic acid are more preferable in the view point of the prevention of diarrhea and other diseases of animals and animal's favorite.

Some of those carboxylic acids are the same as carboxylic acids included in said vinegars, flesh of Japanese apricot, oranges, tomatoes and strawberrys used as component (A) in the present invention. However, said "edible organic acid" used as component (B) in the present invention means a refined organic acid and is added into the feed composition of the present invention independently of said component (A). As said component (B), saccharides may be used alone or in admixture with the edible organic acid.

The occurrence of diseases of animals is more effectively prevented by the addition of Lactobacillus bifidus to the feed composition comprising said components (A) and (B). Both of dried and undried Lactobacillus bifidus may be used.

In the present invention, a mix proportion of each component may vary depending on animal's kind, age and body weight. However, in general, the feed composition of the present invention comprises 0.1-50% of at least one of the vinegar, flesh of Japanese apricot, oranges tomatoes and strawberrys, 10-99.9% of the saccharides and 1-60% of the edible organic acid based on the total weight of the feed composition. When Lactobacillus bifidus is further added, in general, it is added in amount of about $2.5 \times 10^{6-8}$ cells per 100g of the dried feed composition.

The preferable embodiments of the present invention are as follows:

In the following embodiments, "%" is based on the total weight of the veterinary composition.

(1) A composition comprising 1-25% of the vinegar, 1-20% of the flesh of Japanese apricot, 15-95.5% of saccharide and 2.5-40% of the edible organic acid.

(2) A composition comprising 1-25% of the vinegar and 75-99% of saccharides.

(3) A composition comprising 1-20% of the flesh of the Japanese apricot and 80-99% of saccharides.

(4) A composition of comprising 1-25% of the vinegar, 1-20% of the flesh of the Japanese apricot and 55-98% of saccharides.

(5) A composition comprising 1-25% of the vinegar, 1-20% of the flesh of Japanese apricot, 15-95.5% of saccharide and 2.5-40% of the edible organic acid and $2.5 \times 10^{8-10}$ cells of the Lactobacillus bifidus per 100g of the mixed composition.

(6) A composition comprising 1-25% of the vinegar, 35-96.5% of saccharides and 2.5-40% of the edible organic acid and $2.5 \times 10^{8-10}$ cells of the Lactobacillus bifidus per 100g of the composition.

(7) A composition comprising 1-20% of the flesh of the Japanese apricot, 40-96.5% of saccharides and 2.5-40% of the edible organic acid and $2.5 \times 10^{8-10}$ cells of the Lactobacillus bifidus per 100g of the composition.

Each component element is mixed according to any conventional methods.

The veterinary composition for animals of the present invention may be solely fed to animals. However, the composition is more preferably fed to aminals in the form of a solution or dispersion in water, or in admixture with a base feed stuff such as corns, wheat bran, wheat, wheat flour, soybean meal, milo, fish meal, fish powder or their mixture. In such cases, 0.1-10% of the composition is generally added to water or the base feed stuff based on the weight of water or the feed stuff.

Further, the composition may previously be mixed with the feed stuff.

In general, the composition of the invention is fed to animals in the amount of 0.01-10g per 1 Kg of the body weight of the animal. However, the amount may be varied.

Further, the composition of the invention may be used in admixture with other therapeutic agents.

The veterinary composition for animals of the invention can prevent more effectively the frequent occurrence of diarrhea, loose feces and other diseases than a composition consisting of saccharides and an edible organic acid. As the result, the composition of the present invention can step up the growth of the animals.

The composition of the present invention is based on only safe natural materials and thus is safe to animals and people who take meats, eggs and milk of the animals, and animals take it favorably. The animals which take the composition of the present invention provide us with good meats. When the composition of the present invention is fed to cows, the production of milk increases, and the proportion of the milk fat in milk increases.

Further, the present composition for animals can be fed to animals in admixture with other therapeutic agents.

The present invention described herein is illustrated by the following examples.

In the following examples, "Mean Milk Fat percentage" (called hereinafter "M.M.F.%"), "Proportion of Grown Animals" (called hereinafter "P.G.A."), "Increased Body Weight/animal•day" (called hereinafter "I.W./a.d.") and "Ingestion amount/animal•day" (called hereinafter "Ingestion") are calculated according to the following equations.

$$\text{M.M.F. (\%)} = \frac{\text{sum of milk fat percentages* of 180 pieces obtained by milking 30 cows 6 times a day}}{180}$$

$$\text{* milk fat percentage(\%)} = \frac{\text{amount of milk fat}}{\text{amount of whole milk}} \times 100$$

$$\text{P.G.A. (\%)} = \frac{\text{the number of animals living at the end of the test}}{\text{the number of animals at the beginning of the test}} \times 100$$

$$\text{I.W./a.d.} = \frac{\text{mean body weight of animals at the end of test} - \text{mean body weight of animals at the beginning of test}}{\text{total days for test}}$$

$$\text{Ingestion} = \frac{\text{amount of feed stuff ingested by animals of one test section}}{\text{test days} \times \text{the number of animals}}$$

In the following examples, a powdery rice vinegar (Mitsukansu Co.) was used as the vinegar, and a powdery flesh of Japanese apricot produced by Ikeda Touka Co. was used as the flesh of Japanese apricot, and powdery rind of lemon (Nankaikako Co.) was used as the lemon powder, and tomato powder produced by Spreader Co. was used as the tomato powder, and dried Lactobacillus bifidus (Oriental Koubo Co.) was used as the Lactobacillus bifidus.

Examples 1-94 and Comparative Examples 1-38

Components shown in Table 1 below were mixed in accordance with weight proportions shown in Table 1 to prepare compositions for animals of the present Examples 1-94 and Comparative Examples 1-38.

Each composition was diluted with water by way of a given magnification shown in Table 1, and then fed freely to animals instead of water. After a given test period, the total number of animals suffering from diarrhea and loose feces (called hereinafter "total D & L") was counted. The results are shown in Table 1 below.

Table 1-(i)

* Water dilution magnification (times)

| | Mix proportions of each component in feed composition for animals (wt.%) | | | | | | | | | Results |
| | Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total number of animals |
|---|---|---|---|---|---|---|---|---|---|---|
| Example | | | | | | | | | | |
| 1 | 90 | 7.5 | 2.5 | | | Pig (4 weeks old) | 10 | 21 | 25 | 42/210 |
| 2 | 91.25 | 7.5 | | 1.25 | | ditto | 10 | 21 | 25 | 40/210 |
| 3 | 88.75 | 7.5 | 2.5 | 1.25 | | ditto | 10 | 21 | 25 | 20/210 |
| 4 | 90 | 7.5 | 2.5 | | $2.5 \times 10^8$/100g | ditto | 10 | 21 | 25 | 30/210 |
| 5 | 91.25 | 7.5 | | 1.25 | $2.5 \times 10^8$/100g | ditto | 10 | 21 | 25 | 31/210 |
| 6 | 88.75 | 7.5 | 2.5 | 1.25 | $2.5 \times 10^8$/100g | ditto | 10 | 21 | 25 | 15/210 |
| Comparative Example | | | | | | | | | | |
| 1 | 92.5 | 7.5 | | | | ditto | 10 | 21 | 25 | 71/210 |
| Example | | | | | | | | | | |
| 7 | 96.9 | 3 | 0.1 | | | ditto | 10 | 21 | 25 | 60/210 |
| 8 | 96.9 | 3 | | 0.1 | | ditto | 10 | 21 | 25 | 67/210 |
| 9 | 96.8 | 3 | 0.1 | 0.1 | | ditto | 10 | 21 | 25 | 50/210 |
| 10 | 96.9 | 3 | 0.1 | | $2.5 \times 10^6$/100g | ditto | 10 | 21 | 25 | 52/210 |
| 11 | 96.9 | 3 | | 0.1 | $2.5 \times 10^6$/100g | ditto | 10 | 21 | 25 | 53/210 |
| 12 | 96.8 | 3 | 0.1 | 0.1 | $2.5 \times 10^6$/100g | ditto | 10 | 21 | 25 | 45/210 |
| Comparative Example | | | | | | | | | | |
| 2 | 97 | 3 | | | | ditto | 10 | 21 | 25 | 75/210 |
| Example | | | | | | | | | | |
| 13 | 40 | 25 | 15 | 20 | | ditto | 10 | 21 | 25 | 30/210 |

EP 0 275 946 B1

Table 1-(i) (Cont.)

* Water dilution magnification (times)

| | Mix proportions of each component in feed composition for animals (wt.%) | | | | | Kind of animal | Number of animals | Feed periods (days) | Dilution(*) (times) | Results |
|---|---|---|---|---|---|---|---|---|---|---|
| | Sugar | Citric acid | Vinegar | Powdery flesh of Japanese apricot | Lactobacillus bifidus (cells/100g) | | | | | Total D&L / total number of animals |
| Example | | | | | | | | | | |
| 14 | 55 | 25 | | 20 | | Pig (4 weeks old) | 10 | 21 | 25 | 31/210 |
| 15 | 40 | 25 | 15 | 20 | | ditto | 10 | 21 | 25 | 12/210 |
| 16 | 60 | 25 | 15 | | $2.5 \times 10^{10}$/100g | ditto | 10 | 21 | 25 | 22/210 |
| 17 | 55 | 25 | | 20 | $2.5 \times 10^{10}$/100g | ditto | 10 | 21 | 25 | 21/210 |
| 18 | 40 | 25 | 15 | 20 | $2.5 \times 10^{10}$/100g | ditto | 10 | 21 | 25 | 8/210 |
| Comparative Example | | | | | | | | | | |
| 3 | 75 | 25 | | | | ditto | 10 | 21 | 25 | 60/210 |
| Example | | | | | | | | | | |
| 19 | 90 | 7.5 | 2.5 | | | Calf (2 weeks old) | 10 | 21 | 25 | 50/210 |
| 20 | 91.25 | 7.5 | | 1.25 | | ditto | 10 | 21 | 25 | 49/210 |
| 21 | 88.75 | 7.5 | 2.5 | 1.25 | | ditto | 10 | 21 | 25 | 25/210 |
| 22 | 90 | 7.5 | 2.5 | | $2.5 \times 10^{8}$/100g | ditto | 10 | 21 | 25 | 32/210 |
| Comparative Example | | | | | | | | | | |
| 4 | 92.5 | 7.5 | | | | ditto | 10 | 21 | 25 | 108/210 |
| Example | | | | | | | | | | |
| 23 | 96.9 | 3 | 0.1 | | | ditto | 10 | 21 | 25 | 60/210 |
| 24 | 96.9 | 3 | | 0.1 | | ditto | 10 | 21 | 25 | 56/210 |
| 25 | 96.8 | 3 | 0.1 | 0.1 | | ditto | 10 | 21 | 25 | 34/210 |
| 26 | 96.9 | 3 | 0.1 | | $2.5 \times 10^{8}$/100g | ditto | 10 | 21 | 25 | 40/210 |

## Table 1-(i) (Cont.)

* Water dilution magnification (times)

| Mix proportions of each component in feed composition for animals (wt.%) | | | | | | | | | Results |
|---|---|---|---|---|---|---|---|---|---|
| Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total number of animals |
| **Comparative Example** | | | | | | | | | |
| 97 | 3 | | | | Calf (2 weeks old) | 10 | 21 | 25 | 98/210 |
| **Example** | | | | | | | | | |
| 27 · 40 | 25 | 15 | 20 | | ditto | 10 | 21 | 100 | 60/210 |
| 28 · 60 | 25 | 15 | | $2.5 \times 10^{10}$/100g | ditto | 10 | 21 | 100 | 44/210 |
| **Comparative Example** | | | | | | | | | |
| 6 · 75 | 25 | | | | ditto | 10 | 21 | 100 | 101/210 |
| **Example** | | | | | | | | | |
| 29 · 90 | 7.5 | 2.5 | | | Lamb (4 weeks old) | 10 | 28 | 25 | 22/280 |
| 30 · 91.25 | 7.5 | | 1.25 | | ditto | 10 | 28 | 25 | 20/280 |
| 31 · 88.75 | 7.5 | 2.5 | 1.25 | | ditto | 10 | 28 | 25 | 10/280 |
| 32 · 90 | 7.5 | 2.5 | | $2.5 \times 10^{8}$/100g | ditto | 10 | 28 | 25 | 15/280 |
| **Comparative Example** | | | | | | | | | |
| 7 · 92.5 | 7 5 | | | | ditto | 10 | 28 | 25 | 62/280 |
| **Example** | | | | | | | | | |
| 33 · 96.9 | 3 | 0.1 | | | ditto | 10 | 28 | 25 | 32/280 |
| 34 · 96.9 | 3 | | 0.1 | | ditto | 10 | 28 | 25 | 30/280 |

EP 0 275 946 B1

Table 1-(1) (Cont.)

* Water dilution magnification (tim s)

Mix proportions of each component in feed composition for animals (wt.%)

Results

| | Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total numbe of animals |
|---|---|---|---|---|---|---|---|---|---|---|
| Example | | | | | | | | | | |
| 35 | 96.8 | 3 | 0.1 | 0.1 | | Lamb (4 weeks old) | 10 | 28 | 25 | 20/280 |
| 36 | 96.9 | 3 | 0.1 | | $2.5 \times 10^8$/100g | ditto | 10 | 28 | 25 | 29/280 |
| Comparative Example | | | | | | | | | | |
| 8 | 97.0 | 3 | | | | ditto | 10 | 28 | 25 | 60/280 |
| Example | | | | | | | | | | |
| 37 | 40 | 25 | 15 | 20 | | ditto | 10 | 28 | 100 | 40/280 |
| 38 | 60 | 25 | 15 | | $2.5 \times 10^{10}$/100g | ditto | 10 | 28 | 100 | 36/280 |
| Comparative Example | | | | | | | | | | |
| 9 | 75 | 25 | | | | ditto | 10 | 28 | 100 | 61/280 |
| Example | | | | | | | | | | |
| 39 | 90 | 7.5 | 2.5 | | | Chiken (3 weeks old) | 200 | 35 | 25 | 423/70 0 |
| 40 | 91.25 | 7.5 | | 1.25 | | ditto | 200 | 35 | 25 | 403/70 0 |
| 41 | 88.75 | 7.5 | 2.5 | 1.25 | | ditto | 200 | 35 | 25 | 198/70 0 |
| 42 | 90 | 7.5 | 2.5 | | $2.5 \times 10^8$/100g | ditto | 200 | 35 | 25 | 309/70 0 |
| Comparative Example | | | | | | | | | | |
| 10 | 92.5 | 7.5 | | | | ditto | 200 | 35 | 25 | 1066/70 0 |

Table 1-(i) (Cont.)

* Water dilution magnification (times)

Mix proportions of each component in feed
composition for animals (wt.%)

Results

| | Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total number of animals |
|---|---|---|---|---|---|---|---|---|---|---|
| Example | | | | | | | | | | |
| 43 | 96.9 | 3 | 0.1 | | | Chiekn (3 weeks old) | 200 | 35 | 25 | 603/7000 |
| 44 | 96.9 | 3 | 0.1 | | | ditto | 200 | 35 | 25 | 600/7000 |
| 45 | 96.8 | 3 | 0.1 | 0.1 | | ditto | 200 | 35 | 25 | 503/7000 |
| 46 | 96.9 | 3 | 0.1 | | $2.5\times10^8$/100g | ditto | 200 | 35 | 25 | 621/7000 |
| Comparative Example | | | | | | | | | | |
| 11 | 97.0 | 3 | | | | ditto | 200 | 35 | 25 | 1050/7000 |
| Example | | | | | | | | | | |
| 47 | 40 | 25 | 15 | 20 | | ditto | 200 | 35 | 100 | 611/7000 |
| 48 | 60 | 25 | 15 | | $2.5\times10^{10}$/100g | ditto | 200 | 35 | 100 | 601/7000 |
| Comparative Example | | | | | | | | | | |
| 12 | 75 | 25 | | | | ditto | 200 | 35 | 100 | 1023/7000 |
| Example | | | | | | | | | | |
| 49 | 90 | 7.5 | 2.5 | | | Dog (65 days old) | 20 | 35 | 25 | 40/700 |
| 50 | 91.25 | 7.5 | | 1.25 | | ditto | 20 | 35 | 25 | 45/700 |
| 51 | 88.75 | 7.5 | 2.5 | 1.25 | | ditto | 20 | 35 | 25 | 25/700 |
| 52 | 90 | 7.5 | 2.5 | | $2.5\times10^8$/100g | ditto | 20 | 35 | 25 | 36/700 |
| Comparative Example | | | | | | | | | | |
| 13 | 92.5 | 7.5 | | | | ditto | 20 | 35 | 25 | 141/700 |

EP 0 275 946 B1

Table 1-(i) (Cont.)

* Water dilution magnification (times)

| | Mix proportions of each component in feed composition for animals (wt.%) | | | | | | | | | Results |
|---|---|---|---|---|---|---|---|---|---|---|
| | Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total number of animals |
| Example | | | | | | | | | | |
| 53 | 96.9 | 3 | 0.1 | | | Dog (65 days old) | 20 | 35 | 25 | 62/700 |
| 54 | 96.9 | 3 | | 0.1 | | ditto | 20 | 35 | 25 | 64/700 |
| 55 | 96.8 | 3 | 0.1 | 0.1 | | ditto | 20 | 35 | 25 | 50/700 |
| 56 | 96.9 | 3 | 0.1 | | $2.5 \times 10^8$/100g | ditto | 20 | 35 | 25 | 50/700 |
| Comparative Example | | | | | | | | | | |
| 14 | 97 | 3 | | | | ditto | 20 | 35 | 25 | 120/700 |
| Example | | | | | | | | | | |
| 57 | 40 | 25 | 15 | 20 | | ditto | 20 | 35 | 100 | 70/700 |
| 58 | 60 | 25 | 15 | | $2.5 \times 10^{10}$/100g | ditto | 20 | 35 | 100 | 72/700 |
| Comparative Example | | | | | | | | | | |
| 15 | 75 | 25 | | | | ditto | 20 | 35 | 100 | 112/700 |
| Example | | | | | | | | | | |
| 59 | 10 | 50 | 30 | 10 | | ditto | 20 | 35 | 100 | 62/700 |
| 60 | 10 | 50 | 15 | 25 | | ditto | 20 | 35 | 100 | 59/700 |
| 61 | 88 | 1 | 1 | 10 | | ditto | 20 | 35 | 100 | 56/700 |
| Comparative Example | | | | | | | | | | |
| 16 | 10 | 90 | | | | ditto | 20 | 35 | 100 | 116/700 |
| 17 | 50 | 50 | | | | ditto | 20 | 35 | 100 | 109/700 |
| 18 | 99 | 1 | | | | ditto | 20 | 35 | 100 | 113/700 |

Table 1-(ii)

* Water dilution magnification (times)

| | Mix proportions of each component in feed composition for animals (wt.%) | | | | | | | | Results |
| | Glucose | Lactic acid | Vinegar | Powdery rind of lemon | Kind of animal | Number of animals | Feed periods (days) | Dilution(*) (times) | Total D&L / total number of animals |
|---|---|---|---|---|---|---|---|---|---|
| **Example** | | | | | | | | | |
| 62 | 10 | 50 | 30 | 10 | Dog (65 days old) | 20 | 35 | 100 | 60/700 |
| 63 | 10 | 50 | 15 | 25 | ditto | 20 | 35 | 100 | 58/700 |
| 64 | 88 | 1 | 1 | 10 | ditto | 20 | 35 | 100 | 61/700 |
| 65 | 98.9 | 1 | | 0.1 | ditto | 20 | 35 | 100 | 57/700 |
| 66 | 88.75 | 7.5 | 2.5 | 1.25 | ditto | 20 | 35 | 100 | 40/700 |
| **Comparative Example** | | | | | | | | | |
| 19 | 10 | 90 | | | ditto | 20 | 35 | 100 | 100/700 |
| 20 | 50 | 50 | | | ditto | 20 | 35 | 100 | 110/700 |
| 21 | 99 | 1 | | | ditto | 20 | 35 | 100 | 108/700 |
| 22 | 92.5 | 7.5 | | | ditto | 20 | 35 | 100 | 110/700 |

Table 1-(iii)

* Water dilution magnification (times)

| | Mix proportions of each component in feed composition for animals (wt.%) | | | | | | | | Results |
| | Glucose | Fumaric acid | Vinegar | Powdery tomato | Kind of animal | Number of animals | Feed periods (days) | Dilution(*) (times) | Total D&L / total number of animals |
|---|---|---|---|---|---|---|---|---|---|
| Example | | | | | | | | | |
| 67 | 10 | 50 | 30 | 10 | Dog (65 days old) | 20 | 35 | 100 | 61/700 |
| 68 | 10 | 50 | 15 | 25 | ditto | 20 | 35 | 100 | 63/700 |
| 69 | 88 | 1 | 1 | 10 | ditto | 20 | 35 | 100 | 60/700 |
| 70 | 98.9 | 1 | | 0.1 | ditto | 20 | 35 | 100 | 58/700 |
| 71 | 88.75 | 7.5 | 2.5 | 1.25 | ditto | 20 | 35 | 100 | 38/700 |
| Comparative Example | | | | | | | | | |
| 23 | 10 | 90 | | | ditto | 20 | 35 | 100 | 101/700 |
| 24 | 50 | 50 | | | ditto | 20 | 35 | 100 | 105/700 |
| 25 | 99 | 1 | | | ditto | 20 | 35 | 100 | 109/700 |

EP 0 275 946 B1

Table 1-(iv)

* Water dilution magnification (times)

| | Mix proportions of each component in feed composition for animals (wt.%) | | | | | | | | | Results |
|---|---|---|---|---|---|---|---|---|---|---|
| | Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total number of animals |
| Example | | | | | | | | | | |
| 72 | 90 | 7.5 | 2.5 | | | Cat (60 days old) | 20 | 35 | 25 | 21/700 |
| 73 | 91.25 | 7.5 | | 1.25 | | ditto | 20 | 35 | 25 | 22/700 |
| 74 | 88.75 | 7.5 | 2.5 | 1.25 | | ditto | 20 | 35 | 25 | 14/700 |
| 75 | 90 | 7.5 | 2.5 | | $2.5 \times 10^8/100g$ | ditto | 20 | 35 | 25 | 20/700 |
| Comparative Example | | | | | | | | | | |
| 26 | 92.5 | 7.5 | | | | ditto | 20 | 35 | 25 | 85/700 |
| Example | | | | | | | | | | |
| 76 | 96.9 | 3 | 0.1 | | | ditto | 20 | 35 | 25 | 50/700 |
| 77 | 96.9 | 3 | | 0.1 | | ditto | 20 | 35 | 25 | 51/700 |
| 78 | 96.8 | 3 | 0.1 | 0.1 | | ditto | 20 | 35 | 25 | 40/700 |
| 79 | 96.9 | 3 | 0.1 | | $2.5 \times 10^8/100g$ | ditto | 20 | 35 | 25 | 49/700 |
| Comparative Example | | | | | | | | | | |
| 27 | 97 | 3 | | | | ditto | 20 | 35 | 25 | 81/700 |
| Example | | | | | | | | | | |
| 80 | 40 | 25 | 15 | 20 | | ditto | 20 | 35 | 100 | 47/700 |
| 81 | 60 | 25 | 15 | | $2.5 \times 10^{10}/100g$ | ditto | 20 | 35 | 100 | 44/700 |
| Comparative Example | | | | | | | | | | |
| 28 | 75 | 25 | | | | ditto | 20 | 35 | 100 | 76/700 |

Table 1-(iv) (Cont.)

* Water diluton magnification (times)

| | Mix proportions of each component in feed composition for animals (wt.%) | | | | | | | | Results |
| | Sugar | Citric acid | Vinegar | Powdery flesh of Japanese apricot | Lactobacillus bifidus (cells/100g) | Kind of animal | Number of animals | Feed periods (days) | Dilution(*) (times) | Total D&L / total number of animals |
|---|---|---|---|---|---|---|---|---|---|---|
| Example | | | | | | | | | | |
| 82 | 10 | 50 | 30 | 10 | | Cat (60 days old) | 20 | 35 | 100 | 50/700 |
| 83 | 10 | 50 | 15 | 25 | | ditto | 20 | 35 | 100 | 51/700 |
| 84 | 88 | 1 | 1 | 10 | | ditto | 20 | 35 | 100 | 48/700 |
| Comparative Example | | | | | | | | | | |
| 29 | 10 | 90 | | | | ditto | 20 | 35 | 100 | 81/700 |
| 30 | 50 | 50 | | | | ditto | 20 | 35 | 100 | 85/700 |
| 31 | 99 | 1 | | | | ditto | 20 | 35 | 100 | 80/700 |

EP 0 275 946 B1

## Table 1-(v)

* Water dilution magnification (times)

| | Mix proportions of each component in feed composition for animals (wt.%) | | | | | | | | Results |
| | Glucose | Lactic acid | Vinegar | Powdery rind of lemon | Kind of animal | Number of animals | Feed periods (days) | Dilution(*) (times) | Total D&L / total number of animals |
|---|---|---|---|---|---|---|---|---|---|
| Example | | | | | | | | | |
| 85 | 10 | 50 | 30 | 10 | Cat (60 days old) | 20 | 35 | 100 | 48/700 |
| 86 | 10 | 50 | 15 | 25 | ditto | 20 | 35 | 100 | 47/700 |
| 87 | 88 | 1 | 1 | 10 | ditto | 20 | 35 | 100 | 49/700 |
| 88 | 98.9 | 1 | | 0.1 | ditto | 20 | 35 | 100 | 48/700 |
| Example | | | | | | | | | |
| 89 | 88.75 | 7.5 | 2.5 | 1.25 | ditto | 20 | 35 | 100 | 25/700 |
| Comparative Example | | | | | | | | | |
| 32 | 10 | 90 | | | ditto | 20 | 35 | 100 | 89/700 |
| 33 | 50 | 50 | | | ditto | 20 | 35 | 100 | 90/700 |
| 34 | 99 | 1 | | | ditto | 20 | 35 | 100 | 88/700 |
| 35 | 92.5 | 7.5 | | | ditto | 20 | 35 | 100 | 89/700 |

Table 1-(vi)

* Water dilution magnification (times)

| | Mix proportions of each component in feed composition for animals (wt.%) | | | | Kind of animal | Number of animals | Feed periods (days) | Dilution(*) (times) | Results Total D&L / total number of animals |
|---|---|---|---|---|---|---|---|---|---|
| | Glucose | Fumaric acid | Vinegar | Powdery tomato | | | | | |
| Example | | | | | | | | | |
| 90 | 10 | 50 | 30 | 10 | Cat 60 days old) | 20 | 35 | 100 | 43/700 |
| 91 | 10 | 50 | 15 | 25 | ditto | 20 | 35 | 100 | 48/700 |
| 92 | 88 | 1 | 1 | 10 | ditto | 20 | 35 | 100 | 49/700 |
| 93 | 98.9 | 1 | | 0.1 | ditto | 20 | 35 | 100 | 47/700 |
| 94 | 88.75 | 7.5 | 2.5 | 1.25 | ditto | 20 | 35 | 100 | 28/700 |
| Comparative Example | | | | | | | | | |
| 36 | 10 | 90 | | | ditto | 20 | 35 | 100 | 90/700 |
| 37 | 50 | 50 | | | ditto | 20 | 35 | 100 | 87/700 |
| 38 | 99 | 1 | | | ditto | 20 | 35 | 100 | 88/700 |

Examples 95-114 and Comparative Examples 39-44

Components shown in Table 2 below were mixed in accordance with weight proportions shown in Table 2 to prepare feed compositions for animals of the present Examples 95-114 and Comparative Examples 39-

17

44.

Each of the feed composition for animals was added to Base Feed Stuff A or B shown below at a given weight proportion shown in Table 2 to prepare test feed stuffs. Each of the test feed stuffs was fed to animals freely. "I.W./a.d." and "Ingestion" were determined. The results are shown in Table 2 below.

| Composition of Base Feed Stuff A | |
|---|---|
| Corn | 450 weight parts |
| Milo | 310 weight parts |
| Soybean meal | 146 weight parts |
| Rapeseed meal | 30 weight parts |
| Fish powder | 15 weight parts |
| meat born meal | 10 weight parts |
| Yellow grease | 18 weight parts |
| Calcium carbonate | 5 weight parts |
| Calcium phosphate | 8 weight parts |
| Salt | 3 weight parts |
| Premix vitamins & minerals | 5 weight parts |

| Composition of Base Feed Stuff B | |
|---|---|
| Corn | 300 weight parts |
| Milo | 135 weight parts |
| Wheat bran | 70 weight parts |
| Soybean meal | 246 weight parts |
| Wheat flour | 180 weight parts |
| Yellow grease | 7 weight parts |
| Molasses | 30 weight parts |
| Calcium carbonate | 14.5 weight parts |
| Calcium triphosphate | 11 weight parts |
| Salt | 5 weight parts |
| Vitamins and Minerals | 1.5 weight parts |

Table 2

* Kind of Base Feed Stuff
** Proportion of the feed composition
added to Base Feed Stuff (wt.%)

Mix proportions of each component in feed
composition for animals (wt.%)

| | Sugar | Citric acid | Vinegar | Powdery flesh of Japanese apricot | Lactobacillus bifidus (cells/100g) | Kind of animal | Number of animals | Feed periods (days) | K.B.F.S.* | ** P.F.B. (wt.%) | I.W./ a.d. (g) | Ingestion (g) |
|---|---|---|---|---|---|---|---|---|---|---|---|---|
| Example | | | | | | Pig (4 | | | | | | |
| 95 | 90 | 7.5 | 2.5 | | | weeks old) | 20 | 14 | A | 2 | 471 | 500 |
| 96 | 91.25 | 7.5 | | 1.25 | | ditto | 20 | 14 | A | 2 | 464 | 490 |
| 97 | 88.75 | 7.5 | 2.5 | 1.25 | | ditto | 20 | 14 | A | 2 | 468 | 510 |
| 98 | 90 | 7.5 | 2.5 | | $2.5 \times 10^8$/100g | ditto | 20 | 14 | A | 2 | 479 | 508 |
| Comparative Example | | | | | | | | | | | | |
| 39 | 92.5 | 7.5 | | | | ditto | 20 | 14 | A | 2 | 386 | 435 |
| Example | | | | | | | | | | | | |
| 99 | 96.9 | 3 | 0.1 | | | ditto | 20 | 14 | A | 2 | 464 | 491 |
| 100 | 96.9 | 3 | | 0.1 | | ditto | 20 | 14 | A | 2 | 450 | 481 |
| 101 | 96.8 | 3 | 0.1 | 0.1 | | ditto | 20 | 14 | A | 2 | 460 | 498 |
| 102 | 96.9 | 3 | 0.1 | | $2.5 \times 10^8$/100g | ditto | 20 | 14 | A | 2 | 455 | 490 |
| Comparative Example | | | | | | | | | | | | |
| 40 | 97 | 3 | | | | ditto | 20 | 14 | A | 2 | 388 | 440 |
| Example | | | | | | | | | | | | |
| 103 | 40 | 25 | 15 | 20 | | ditto | 20 | 14 | A | 2 | 453 | 486 |
| 104 | 60 | 25 | 15 | | $2.5 \times 10^{10}$/100g | ditto | 20 | 14 | A | 2 | 451 | 483 |
| Comparative Example | | | | | | | | | | | | |
| 41 | 75 | 25 | | | | ditto | 20 | 14 | A | 2 | 398 | 456 |

Table 2 (Cont.)

* Kind of Base Feed Stuff
** Proportion of the feed composition added to Base Feed Stuff (wt.%)

| | Mix proportions of each component in feed composition for animals (wt.%) | | | | | Kind of animal | Number of animals | Feed periods (days) | K.B.F.S.* | P.F.B.** (wt.%) | I.W./a.d. (g) | Ingestion (g) |
|---|---|---|---|---|---|---|---|---|---|---|---|---|
| | Sugar | Citric acid | Vinegar | Powdery flesh of Japanese apricot | Lactobacillus bifidus (cells/100g) | | | | | | | |
| **Example** | | | | | | | | | | | | |
| 105 | 90 | 7.5 | 2.5 | | | Calf (3 weeks old) | 20 | 21 | B | 4 | 1029 | 1780 |
| 106 | 91.25 | 7.5 | | 1.25 | | ditto | 20 | 21 | B | 4 | 1038 | 1769 |
| 107 | 88.75 | 7.5 | 2.5 | 1.25 | | ditto | 20 | 21 | B | 4 | 1043 | 1779 |
| 108 | 90 | 7.5 | 2.5 | | $2.5 \times 10^8$/100g | ditto | 20 | 21 | B | 4 | 1029 | 1768 |
| **Comparative Example** | | | | | | | | | | | | |
| 42 | 92.5 | 7.5 | | | | ditto | 20 | 21 | B | 4 | 880 | 1680 |
| **Example** | | | | | | | | | | | | |
| 109 | 96.9 | 3 | 0.1 | | | ditto | 20 | 21 | B | 4 | 991 | 1769 |
| 110 | 96.9 | 3 | | 0.1 | | ditto | 20 | 21 | B | 4 | 986 | 1756 |
| 111 | 96.8 | 3 | 0.1 | 0.1 | | ditto | 20 | 21 | B | 4 | 998 | 1768 |
| 112 | 96.9 | 3 | 0.1 | | $2.5 \times 10^8$/100g | ditto | 20 | 21 | B | 4 | 976 | 1750 |
| **Comparative Example** | | | | | | | | | | | | |
| 43 | 97 | 3 | | | | ditto | 20 | 21 | B | 4 | 898 | 1698 |
| **Example** | | | | | | | | | | | | |
| 113 | 40 | 25 | 15 | 20 | | ditto | 20 | 21 | B | 4 | 976 | 1763 |
| 114 | 60 | 25 | 15 | | $2.5 \times 10^{10}$/100g | ditto | 20 | 21 | B | 4 | 981 | 1745 |
| **Comparative Example** | | | | | | | | | | | | |
| 44 | 75 | 25 | | | | ditto | 20 | 21 | B | 4 | 887 | 1683 |

Examples 115-157 and Comparative Examples 45-63

Components shown in Table 3 below were mixed in accordance with weight proportions shown in Table 3 to prepare feed compositions for animals of the present Examples 115-157 and Comparative Examples 45-63.

Each of the feed compositions for animals was added to Base Feed Stuff C shown below at a given weight proportion shown in Table 3 to prepare test feed stuffs. Each of the test feed stuff was fed to animals freely. The results are shown in Table 3 below.

| Composition of Base Feed Stuff C | |
| --- | --- |
| Corn | 400 weight parts |
| Milo | 230 weight parts |
| Soybean meal | 270 weight parts |
| Fish powder (65%) | 50 weight parts |
| Yellow grease | 25 weight parts |
| Calcium carbonate | 5 weight parts |
| Calcium ortho phosphate | 12 weight parts |
| Salt | 1.5 weight parts |
| Premix vitamins & minerals | 6.5 weight parts |

Table 3-(i)

* Kind of Base Feed Stuff
** Proportion of the feed composition added to Base Feed Stuff (wt.%)

Mix proportions of each component in feed composition for animals (wt.%)

| | Sugar | Citric acid | Vinegar | Powdery flesh of Japanese apricot | Lactobacillus bifidus (cells/100g) | Kind of animal | Number of animals | Feed periods (days) | * K.B.F.S. | ** P.F.B. (wt.%) | P.G.A.(%) |
|---|---|---|---|---|---|---|---|---|---|---|---|
| Example | | | | | | | | | | | |
| 115 | 90 | 7.5 | 2.5 | | | Chicken (15 days old) | 5200 | 45 | C | 1 | 99.6 |
| 116 | 91.25 | 7.5 | | 1.25 | | ditto | 5200 | 45 | C | 1 | 99.6 |
| 117 | 88.75 | 7.5 | 2.5 | 1.25 | | ditto | 5200 | 45 | C | 1 | 99.5 |
| 118 | 90 | 7.5 | 2.5 | | $2.5 \times 10^8$/100g | ditto | 5200 | 45 | C | 1 | 99.4 |
| Comparative Example | | | | | | | | | | | |
| 45 | 92.5 | 7.5 | | | | ditto | 5200 | 45 | C | 1 | 95.3 |
| Example | | | | | | | | | | | |
| 119 | 96.9 | 3 | 0.1 | | | ditto | 5200 | 45 | C | 1 | 98.7 |
| 120 | 96.9 | 3 | | 0.1 | | ditto | 5200 | 45 | C | 1 | 98.8 |
| 121 | 96.8 | 3 | 0.1 | 0.1 | | ditto | 5200 | 45 | C | 1 | 99.1 |
| 122 | 96.9 | 3 | 0.1 | | $2.5 \times 10^8$/100g | ditto | 5200 | 45 | C | 1 | 98.9 |
| Comparative Example | | | | | | | | | | | |
| 46 | 97 | 3 | | | | ditto | 5200 | 45 | C | 1 | 96.9 |
| Example | | | | | | | | | | | |
| 123 | 40 | 25 | 15 | 20 | | ditto | 5200 | 45 | C | 1 | 98.9 |
| 124 | 60 | 25 | 15 | | $2.5 \times 10^{10}$/100g | ditto | 5200 | 45 | C | 1 | 98.8 |
| Comparative Example | | | | | | | | | | | |
| 47 | 75 | 25 | | | | ditto | 5200 | 45 | C | 1 | 96.8 |

EP 0 275 946 B1

Table 3-(i) (Cont.)

* Kind of Base Feed Stuff
** Proportion of the feed composition added to Base Feed Stuff (wt.%)

| | Mix proportions of each component in feed composition for animals (wt.%) | | | | | | | | | | |
|---|---|---|---|---|---|---|---|---|---|---|---|
| | Sugar | Citric acid | Vinegar | Powdery flesh of Japanese apricot | Lactobacillus bifidus (cells/100g) | Kind of animal | Number of animals | Feed periods (days) | K.B.F.S * | P.F.B. ** (wt.%) | P.G A.(%) |
| Example | | | | | | Chicken (15 | | | | | |
| 125 | 10 | 50 | 30 | 10 | | days old) | 2200 | 45 | C | 1 | 98.9 |
| 126 | 10 | 50 | 15 | 25 | | ditto | 2200 | 45 | C | 1 | 98.8 |
| 127 | 88 | 1 | 1 | 10 | | ditto | 2200 | 45 | C | 1 | 98.7 |
| Comparative Example | | | | | | | | | | | |
| 48 | 10 | 90 | | | | ditto | 2200 | 45 | C | 1 | 96.7 |
| 49 | 50 | 50 | | | | ditto | 2200 | 45 | C | 1 | 96.6 |
| 50 | 99 | 1 | | | | ditto | 2200 | 45 | C | 1 | 96.9 |

Table 3-(ii)

EP 0 275 946 B1

\* Kind of Base Feed Stuff
\*\* Proportion of the feed composition
added to Base Feed Stuff (wt.%)

Mix proportions of each component in
feed composition for animals (wt.%)

| | Glucose | Lactic acid | Vinegar | Powdery rind of lemon | Kind of animal | Number of animals | Feed periods (days) | \* K.B.F.S. | \*\* P.F.B. (wt.%) | P.G.A.(%) |
|---|---|---|---|---|---|---|---|---|---|---|
| Example | | | | | | | | | | |
| 128 | 10 | 50 | 30 | 10 | Chicken (15 days old) | 2200 | 45 | C | 1 | 98.7 |
| 129 | 10 | 50 | 15 | 25 | ditto | 2200 | 45 | C | 1 | 98.9 |
| 130 | 88 | 1 | 1 | 10 | ditto | 2200 | 45 | C | 1 | 98.6 |
| 131 | 98.9 | 1 | | 0.1 | ditto | 2200 | 45 | C | 1 | 98.8 |
| 132 | 88.75 | 7.5 | 2.5 | 1.25 | ditto | 2200 | 45 | C | 1 | 99.4 |
| Comparative Example | | | | | | | | | | |
| 51 | 10 | 90 | | | ditto | 2200 | 45 | C | 1 | 96.8 |
| 52 | 50 | 50 | | | ditto | 2200 | 45 | C | 1 | 96.7 |
| 53 | 99 | 1 | | | ditto | 2200 | 45 | C | 1 | 96.9 |
| 54 | 92.5 | 7.5 | | | ditto | 2200 | 45 | C | 1 | 97.0 |

## Table 3-(iii)

EP 0 275 946 B1

\* Kind of Base Feed Stuff
\*\* Proportion of the feed composition added to Base Feed Stuff (wt.%)

Mix proportions of each component in feed composition for animals (wt.%)

| | Glucose | Fumaric acid | Vinegar | Powdery tomato | Kind of animal | Number of animals | Feed periods (days) | \* K.B.F.S. | \*\* P.F.B. (wt %) | P.G.A.(%) |
|---|---|---|---|---|---|---|---|---|---|---|
| Example | | | | | | | | | | |
| 133 | 10 | 50 | 30 | 10 | Chicken (15 days old) | 2200 | 45 | C | 1 | 98.8 |
| 134 | 10 | 50 | 15 | 25 | ditto | 2200 | 45 | C | 1 | 98.9 |
| 135 | 88 | 1 | 1 | 10 | ditto | 2200 | 45 | C | 1 | 98.7 |
| 136 | 98.9 | 1 | | 0.1 | ditto | 2200 | 45 | C | 1 | 98.8 |
| 137 | 88.75 | 7.5 | 2.5 | 1.25 | ditto | 2200 | 45 | C | 1 | 99.3 |
| Comparative Example | | | | | | | | | | |
| 55 | 10 | 90 | | | ditto | 2200 | 45 | C | 1 | 96.9 |
| 56 | 50 | 50 | | | ditto | 2200 | 45 | C | 1 | 96.8 |
| 57 | 99 | 1 | | | ditto | 2200 | 45 | C | 1 | 96.9 |

Table 3-(iv)

EP 0 275 946 B1

\* Kind of Base Feed Stuff
\*\* Proportion of the feed composition added to Base Feed Stuff (wt.%)

Mix proportions of each component in feed composition for animals (wt.%)

| | Sugar | Citric acid | Vinegar | Powdery flesh of Japanese apricot | Lactobacillus bifidus (cells/100g) | Kind of animal | Number of animals | Feed periods (days) | \* K.B F.S. | \*\* P.F.B. (wt.%) | P.G.A.(%) |
|---|---|---|---|---|---|---|---|---|---|---|---|
| Example | | | | | | | | | | | |
| 138 | 90 | 7.5 | 2.5 | | | Quail (20 days old) | 500 | 40 | C | 1 | 98.4 |
| 139 | 91.25 | 7.5 | | 1.25 | | ditto | 500 | 40 | C | 1 | 98.6 |
| 140 | 88.75 | 7.5 | 2.5 | 1.25 | | ditto | 500 | 40 | C | 1 | 98.8 |
| 141 | 90 | 7.5 | 2.5 | | $2.5 \times 10^8$/100g | ditto | 500 | 40 | C | 1 | 98.6 |
| Comparative Example | | | | | | | | | | | |
| 58 | 92.5 | 7.5 | | | | ditto | 500 | 40 | C | 1 | 93.8 |
| Example | | | | | | | | | | | |
| 142 | 96.9 | 3 | 0.1 | | | ditto | 500 | 40 | C | 1 | 97.4 |
| 143 | 96.9 | 3 | | 0.1 | | ditto | 500 | 40 | C | 1 | 97.6 |
| 144 | 96.8 | 3 | 0.1 | 0.1 | | ditto | 500 | 40 | C | 1 | 98.0 |
| 145 | 96.9 | 3 | 0.1 | | $2.5 \times 10^8$/100g | ditto | 500 | 40 | C | 1 | 97.6 |
| Comparative Example | | | | | | | | | | | |
| 59 | 97 | 3 | | | | ditto | 500 | 40 | C | 1 | 95.4 |
| Example | | | | | | | | | | | |
| 146 | 40 | 25 | 15 | 20 | | ditto | 500 | 40 | C | 1 | 97.4 |
| 147 | 60 | 25 | 15 | | $2.5 \times 10^{10}$/100g | ditto | 500 | 40 | C | 1 | 97.6 |
| Comparative Example | | | | | | | | | | | |
| 60 | 75 | 25 | | | | ditto | 500 | 40 | C | 1 | 95.2 |

Table 3-(iv) (Cont.)

* Kind of Base Feed Stuff
** Proportion of the feed composition added to Base Feed Stuff (wt.%)

Mix proportions of each component in feed composition for animals (wt.%)

| | Sugar | Citric acid | Vinegar | Powdery flesh of Japanese apricot | Lactobacillus bifidus (cells/100g) | Kind of animal | Number of animals | Feed periods (days) | * K.B.F.S. | ** P.F.B. (wt.%) | P.G.A.(%) |
|---|---|---|---|---|---|---|---|---|---|---|---|
| Example | | | | | | | | | | | |
| 148 | 90 | 7.5 | 2.5 | | | Turkey (20 days old) | 500 | 40 | C | 1 | 98.8 |
| 149 | 91.25 | 7.5 | | 1.25 | | ditto | 500 | 40 | C | 1 | 99.0 |
| 150 | 88.75 | 7.5 | 2.5 | 1.25 | | ditto | 500 | 40 | C | 1 | 98.8 |
| 151 | 90 | 7.5 | 2.5 | | $2.5 \times 10^8$/100g | ditto | 500 | 40 | C | 1 | 99.0 |
| Comparative Example | | | | | | | | | | | |
| 61 | 92.5 | 7.5 | | | | ditto | 500 | 40 | C | 1 | 89.4 |
| Example | | | | | | | | | | | |
| 152 | 96.9 | 3 | 0.1 | | | ditto | 500 | 40 | C | 1 | 97.4 |
| 153 | 96.9 | 3 | | 0.1 | | ditto | 500 | 40 | C | 1 | 97.6 |
| 154 | 96.8 | 3 | 0.1 | 0.1 | | ditto | 500 | 40 | C | 1 | 97.4 |
| 155 | 96.9 | 3 | 0.1 | | $2.5 \times 10^8$/100g | ditto | 500 | 40 | C | 1 | 97.6 |
| Comparative Example | | | | | | | | | | | |
| 62 | 97 | 3 | | | | ditto | 500 | 40 | C | 1 | 90.6 |
| Example | | | | | | | | | | | |
| 156 | 40 | 25 | 15 | 20 | | ditto | 500 | 40 | C | 1 | 97.8 |
| 157 | 60 | 25 | 15 | | $2.5 \times 10^{10}$/100g | ditto | 500 | 40 | C | 1 | 98.0 |
| Comparative Example | | | | | | | | | | | |
| 63 | 75 | 25 | | | | ditto | 500 | 40 | C | 1 | 90.2 |

Examples 158-220 and Comparative Examples 64-82

Components shown in Table 4 below were mixed in accordance with weight proportions shown in Table 4 to prepare feed compositions for animals of the present Examples 158-220 and Comparative Examples

64-82. 1g Of each of the feed compositions for animals was added to 100g of Base Feed Stuff D, E or F shown below to prepare test feed stuffs. Each of the test feed stuffs was fed to animals freely. "Growth %" is shown in Table 4 below.

| Composition of Base Feed Stuff D | |
|---|---|
| Fish powder | 69.4 weight parts |
| Beer yeast | 2.0 weight parts |
| α-starch | 23.0 weight parts |
| Vitamins | 3.6 weight parts |
| Minerals | 2.0 weight parts |

| Composition of Base Feed Stuff E | |
|---|---|
| Fish powder | 65.0 weight parts |
| Cod-liver oil | 5.0 weight parts |
| Wheat flour | 17.4 weight parts |
| Vitamins | 4.0 weight parts |
| Minerals | 5.0 weight parts |
| Carboxy methylcellulose(CMC) | 5.0 weight parts |

| Composition of Base Feed Stuff F | |
|---|---|
| Fish powder | 74.4 weight parts |
| Corn starch | 6.0 weight parts |
| Cod-liver oil | 10.0 weight parts |
| Vitamins | 3.6 weight parts |
| Minerals | 1.0 weight parts |
| CMC | 5.0 weight parts |

28

## Table 4-(i)

* Kind of Base Feed Stuff

Mix proportions of each component in feed composition for animals (wt.%)

| | Sugar | Citric acid | Vinegar | Powdery flesh of Japanese apricot | Lactobacillus bifidus (cells/100g) | Kind of fish | Number of fishes | Feed periods (days) | K.B.F.S. * | Feed per day (times) | P.G.A. |
|---|---|---|---|---|---|---|---|---|---|---|---|
| Example | | | | | | Eel | | | | | |
| 158 | 90 | 7.5 | 2.5 | | | (30g/fish) | 500 | 70 | D | 1 | 97.6 |
| 159 | 91.25 | 7.5 | | 1.25 | | ditto | 500 | 70 | D | 1 | 97.8 |
| 160 | 88.75 | 7.5 | 2.5 | 1.25 | | ditto | 500 | 70 | D | 1 | 97.8 |
| 161 | 90 | 7.5 | 2.5 | | $2.5 \times 10^8$/100g | ditto | 500 | 70 | D | 1 | 97.8 |
| Comparative Example | | | | | | | | | | | |
| 64 | 92.5 | 7.5 | | | | ditto | 500 | 70 | D | 1 | 82.0 |
| Ecample | | | | | | | | | | | |
| 162 | 96.9 | 3 | 0.1 | | | ditto | 500 | 70 | D | 1 | 95.0 |
| 163 | 96.9 | 3 | | 0.1 | | ditto | 500 | 70 | D | 1 | 95.4 |
| 164 | 96.8 | 3 | 0.1 | 0.1 | | ditto | 500 | 70 | D | 1 | 95.4 |
| 165 | 96.9 | 3 | 0.1 | | $2.5 \times 10^8$/100g | ditto | 500 | 70 | D | 1 | 95.8 |
| Comparative Example | | | | | | | | | | | |
| 65 | 97 | 3 | | | | ditto | 500 | 70 | D | 1 | 83.6 |
| Example | | | | | | | | | | | |
| 166 | 40 | 25 | 15 | 20 | | ditto | 500 | 70 | D | 1 | 96.8 |
| 167 | 60 | 25 | 15 | | $2.5 \times 10^{10}$/100g | ditto | 500 | 70 | D | 1 | 96.8 |
| Comparative Example | | | | | | | | | | | |
| 66 | 75 | 25 | | | | ditto | 500 | 70 | D | 1 | 83.2 |

EP 0 275 946 B1

Table 4-(1) (Cont.)

* Kind of Base Feed Stuff

Mix proportions of each component in feed composition for animals (wt.%)

| | Sugar | Citric acid | Vinegar | Powdery flesh of Japanese apricot | Lactobacillus bifidus (cells/100g) | Kind of fish | Number of fishes | Feed periods (days) | K.B.F.S. * | Feed per day (times) | P.G.A. |
|---|---|---|---|---|---|---|---|---|---|---|---|
| Example | | | | | | Eel | | | | | |
| 168 | 10 | 50 | 30 | 10 | | (30g/fish) | 500 | 70 | D | 1 | 94.0 |
| 169 | 10 | 50 | 15 | 25 | | ditto | 500 | 70 | D | 1 | 93.6 |
| 170 | 88 | 1 | 1 | 10 | | ditto | 500 | 70 | D | 1 | 93.8 |
| Comparative Example | | | | | | | | | | | |
| 67 | 10 | 90 | | | | ditto | 500 | 70 | D | 1 | 88.6 |
| 68 | 50 | 50 | | | | ditto | 500 | 70 | D | 1 | 87.8 |
| 69 | 99 | 1 | | | | ditto | 500 | 70 | D | 1 | 88.4 |

EP 0 275 946 B1

Table 4-(ii)

* Kind of Base Feed Stuff

| | Mix proportions of each component in feed composition for animals (wt.%) | | | | Kind of fish | Number of fishes | Feed periods (days) | * K.B.F.S. | Feed per day (times) | P.G.A.(%) |
|---|---|---|---|---|---|---|---|---|---|---|
| | Glucose | Lactic acid | Vinegar | Powdery rind of lemon | | | | | | |
| Example | | | | | Eel | | | | | |
| 171 | 10 | 50 | 30 | 10 | (30g/fish) | 500 | 70 | D | 1 | 94.2 |
| 172 | 10 | 50 | 15 | 25 | ditto | 500 | 70 | D | 1 | 96.2 |
| 173 | 88 | 1 | 1 | 10 | ditto | 500 | 70 | D | 1 | 95.6 |
| 174 | 98.9 | 1 | | 0.1 | ditto | 500 | 70 | D | 1 | 93.8 |
| 175 | 88.75 | 7.5 | 2.5 | 1.25 | ditto | 500 | 70 | D | 1 | 97.6 |
| Comparative Example | | | | | | | | | | |
| 70 | 10 | 90 | | | ditto | 500 | 70 | D | 1 | 88.6 |
| 71 | 50 | 50 | | | ditto | 500 | 70 | D | 1 | 88.0 |
| 72 | 99 | 1 | | | ditto | 500 | 70 | D | 1 | 87.0 |
| 73 | 92.5 | 7.5 | | | ditto | 500 | 70 | D | 1 | 88.4 |

Table 4-(iii)

* Kind of Base Feed Stuff

| | Mix proportions of each component in feed composition for animals (wt.%) | | | | Kind of fish | Number of fishes | Feed periods (days) | * K.B.F.S. | Feed per day (times) | P.G.A.(%) |
|---|---|---|---|---|---|---|---|---|---|---|
| | Glucose | Fumaric acid | Vinegar | Powdery tomato | | | | | | |
| Example | | | | | | | | | | |
| 176 | 10 | 50 | 30 | 10 | Eel (30g/fish) | 500 | 70 | D | 1 | 94.4 |
| 177 | 10 | 50 | 15 | 25 | ditto | 500 | 70 | D | 1 | 93.8 |
| 178 | 88 | 1 | 1 | 10 | ditto | 500 | 70 | D | 1 | 94.2 |
| 179 | 98.9 | 1 | | 0.1 | ditto | 500 | 70 | D | 1 | 94.0 |
| 180 | 88.75 | 7.5 | 2.5 | 1.25 | ditto | 500 | 70 | D | 1 | 96.8 |
| Comparative Example | | | | | | | | | | |
| 74 | 10 | 90 | | | ditto | 500 | 70 | D | 1 | 87.4 |
| 75 | 50 | 50 | | | ditto | 500 | 70 | D | 1 | 88.8 |
| 76 | 99 | 1 | | | ditto | 500 | 70 | D | 1 | 86.2 |

32

Table 4-(iv)

\* Kind of Base Feed Stuff

Mix proportions of each component in feed
composition for animals (wt.%)

| | Sugar | Citric acid | Vinegar | Powdery flesh of Japanese apricot | Lactobacillus bifidus (cells/100g) | Kind of fish | Number of fishes | Feed periods (days) | K.B.F.S. \* | Feed per day (times) | P.G.A. |
|---|---|---|---|---|---|---|---|---|---|---|---|
| Example | | | | | | Horse mackerel | | | | | |
| 181 | 90 | 7.5 | 2.5 | | | (40g/fish) | 200 | 140 | E | 4 | 97.0 |
| 182 | 91.25 | 7.5 | | 1.25 | | ditto | 200 | 140 | E | 4 | 97.0 |
| 183 | 88.75 | 7.5 | 2.5 | 1.25 | | ditto | 200 | 140 | E | 4 | 98.5 |
| 184 | 90 | 7.5 | 2.5 | | $2.5 \times 10^8$/100g | ditto | 200 | 140 | E | 4 | 97.0 |
| Comparative Example | | | | | | | | | | | |
| 77 | 92.5 | 7.5 | | | | ditto | 200 | 140 | E | 4 | 78.5 |
| Example | | | | | | | | | | | |
| 185 | 96.9 | 3 | 0.1 | | | ditto | 200 | 140 | E | 4 | 93.5 |
| 186 | 96.9 | 3 | | 0.1 | | ditto | 200 | 140 | E | 4 | 93.5 |
| 187 | 96.8 | 3 | 0.1 | 0.1 | | ditto | 200 | 140 | E | 4 | 94.0 |
| 188 | 96.9 | 3 | 0.1 | | $2.5 \times 10^8$/100g | ditto | 200 | 140 | E | 4 | 94.0 |
| Comparative Example | | | | | | | | | | | |
| 78 | 97 | 3 | | | | ditto | 200 | 140 | E | 4 | 81.5 |
| Example | | | | | | | | | | | |
| 189 | 40 | 25 | 15 | 20 | | ditto | 200 | 140 | E | 4 | 96.5 |
| 190 | 60 | 25 | 15 | | | ditto | 200 | 140 | E | 4 | 96.0 |
| Comparative Example | | | | | | | | | | | |
| 79 | 75 | 25 | | | | ditto | 200 | 140 | E | 4 | 80.0 |

Table 4-(iv) (Cont.)

*  Kind of Base Feed Stuff

|  | Mix proportions of each component in feed composition for animals (wt.%) | | | | | Kind of fish | Number of fishes | Feed periods (days) | K.B.F.S. * | Feed per day (times) | P.G.A. |
|---|---|---|---|---|---|---|---|---|---|---|---|
|  | Sugar | Citric acid | Vinegar | Powdery flesh of Japanese apricot | Lactobacillus bifidus (cells/100g) | | | | | | |
| Example | | | | | | | | | | | |
| 191 | 90 | 7.5 | 2.5 | | | Yellowtail (20g/fish) | 200 | 350 | F | 4 | 97.5 |
| 192 | 91.25 | 7.5 | 2.5 | 1.25 | | ditto | 200 | 350 | F | 4 | 97.0 |
| 193 | 88.75 | 7.5 | 2.5 | 1.25 | | ditto | 200 | 350 | F | 4 | 97.5 |
| 194 | 90 | 7.5 | 2.5 | | $2.5 \times 10^8/100g$ | ditto | 200 | 350 | F | 4 | 97.0 |
| Comparative Example | | | | | | | | | | | |
| 80 | 92.5 | 7.5 | | | | ditto | 200 | 350 | F | 4 | 85.0 |
| Example | | | | | | | | | | | |
| 195 | 96.9 | 3 | 0.1 | | | ditto | 200 | 350 | F | 4 | 95.0 |
| 196 | 96.9 | 3 | | 0.1 | | ditto | 200 | 350 | F | 4 | 94.5 |
| 197 | 96.8 | 3 | 0.1 | 0.1 | | ditto | 200 | 350 | F | 4 | 95.0 |
| 198 | 96.9 | 3 | 0.1 | | $2.5 \times 10^8/100g$ | ditto | 200 | 350 | F | 4 | 95.0 |
| Comparative Example | | | | | | | | | | | |
| 81 | 97 | 3 | | | | ditto | 200 | 350 | F | 4 | 87.0 |
| Example | | | | | | | | | | | |
| 199 | 40 | 25 | 15 | 20 | | ditto | 200 | 350 | F | 4 | 97.0 |
| 200 | 60 | 25 | 15 | | $2.5 \times 10^{10}/100g$ | ditto | 200 | 350 | F | 4 | 96.0 |
| Comparative Example | | | | | | | | | | | |
| 82 | 75 | 25 | | | | ditto | 200 | 350 | F | 4 | 86.5 |

Examples 201-210 and Comparative Examples 83-85

Components shown in Table 5 below were mixed in accordance with weight proportions shown in Table 5 to prepare feed compositions for animals of the present Examples 201-210 and Comparative Examples 83-85. 0.5g Of each of the feed compositions was added to 100g of Base Feed Stuff G shown below to

34

prepare test feed stuffs. Each of the test feed stuffs was fed freely to milk cows of one month old for 60 days. The amount of milk obtained was determined every day and the mean milk fat was determined every ten days. The results are shown in Table 5 below.

| Composition of Base Feed Stuff G | |
|---|---|
| Corn | 40.0 weight parts |
| Milo | 13.5 weight parts |
| Wheat flour | 18.0 weight parts |
| Barley | 6.5 weight parts |
| Wheat bran | 9.0 weight parts |
| Soybean oil meal | 7.0 weight parts |
| Molasses | 2.7 weight parts |
| Calcium carbonate | 1.5 weight parts |
| Calcium phosphate | 1.1 weight parts |
| Salt | 0.5 weight parts |
| Vitamins | 0.1 weight parts |
| Minerals | 0.1 weight parts |

Table 5

Mix proportions of each component in feed composition for animals (wt.%)

| | Sugar | Citric acid | Vinegar | Powdery flesh of Japanese apricot | Lactobacillus bifidus (cells/100g) | Amount of milk/ day. cow (kg) | M.M.F. (%) |
|---|---|---|---|---|---|---|---|
| **Example** | | | | | | | |
| 201 | 90 | 7.5 | 2.5 | | | 23.3 | 3.8 |
| 202 | 91.25 | 7.5 | | 1.25 | | 23.6 | 3.8 |
| 203 | 88.75 | 7.5 | 2.5 | 1.25 | | 24.6 | 3.8 |
| 204 | 90 | 7.5 | 2.5 | | $2.5 \times 10^8$/100g | 24.0 | 3.8 |
| **Comparative Example** | | | | | | | |
| 83 | 92.5 | 7.5 | | | | 17.9 | 3.4 |
| **Example** | | | | | | | |
| 205 | 96.9 | 3 | 0.1 | | | 22.0 | 3.7 |
| 206 | 96.9 | 3 | | 0.1 | | 22.4 | 3.8 |
| 207 | 96.8 | 3 | 0.1 | 0.1 | | 23.3 | 3.7 |
| 208 | 96.9 | 3 | 0.1 | | $2.5 \times 10^8$/100g | 23.0 | 3.7 |
| **Comparative Example** | | | | | | | |
| 84 | 97 | 3 | | | | 18.2 | 3.4 |
| **Example** | | | | | | | |
| 209 | 40 | 25 | 15 | 20 | | 21.8 | 3.7 |
| 210 | 60 | 25 | 15 | | $2.5 \times 10^{10}$/100g | 22.3 | 3.7 |
| **Comparative Example** | | | | | | | |
| 85 | 75 | 25 | | | | 18.4 | 3.4 |

Example 211

88.75 Weight parts of sugar, 7.5 weight parts of citric acid, 2.5 weight parts of vinegar and 1.25 weight parts of powdery flesh of Japanese apricot were mixed to prepare a feed composition for broilers. 0.7g Of the feed composition was added to 100g of Base Feed Stuff H shown below, and the mixture was then fed freely to 2500 heads of broilers from 15 to 8 days before their forwarding.

Then, 1.28g of said feed composition was added to 100g of said Base Feed Stuff H, and fed freely to said 2500 heads of broilers during 7 days before their forwarding.

| Composition of Base Feed Stuff H | |
| --- | --- |
| Corn | 450 weight parts |
| Milo | 260 weight parts |
| Soybean meal | 190 weight parts |
| Fish powder | 50 weight parts |
| Yellow grease | 30 weight parts |
| Calcium carbonate | 7 weight parts |
| Calcium triphosphate | 6 weight parts |
| Salt | |
| Premix vitamins & minerals | 5 weight parts |

Said broilers were butchered and the quality of their bodies and meats was observed, and the yield of meats was determined. On the other hand, said Base Feed Stuff H not containing the feed composition of the present invention was feed to other 2500 broilers in the same manner as above. These broilers were butchered, and the quality of their bodies and meats was also observed and the yield was determined.

The results are as follows:

Bodies of butchered broilers bred with the feed composition of the present invention (called hereinafter "present broilers") had better skin color and had tighter bodies than those of the comparative broilers.

The yield of butchered broilers' bodies of the present broilers was 1.5% larger than that of the comparative broilers.

The thigh and breast of the present broilers had a beautiful pinkish color and were less fatty and were more resilient than those of the comparative broilers. The stomachs of the present broilers were less fatty.

The total of fatty livers of present 1200 broilers was 1.6 kg, and this was one third of that of 1200 comparative broilers. The yield of dissectioned bodies, which were dissectioned according to IV type-dissection of Japanese Agriculture Standard, was 40.0% in case of the present broilers. On the other hand, in case of the comparative broilers, that was 37.6%.

Breasts of the broilers were frozen in the temperature range of -3°C to -8°C for 81 hours, and then were thawed. Breasts of the present broilers were not hard. On the other hand, those of the comparative broilers were hard. Then, these thawed breasts were maintained at 16°C for 20 minutes. The breats of the present broilers had less drips than those of the comparative broilers.

Example 212

In this example, the feed composition for broilers prepared in the above Example 211 was used for beef cattles.

The feed composition was fed to beef cattles of 490 days old 36g per beef cattle per day together with the Base Feed Stuff I shown below.

| Base Feed Stuff I | |
| --- | --- |
| Corn | 40.0 weight parts |
| Milo | 13.5 weight parts |
| Wheat flour | 18.0 weight parts |
| Barley | 6.5 weight parts |
| Wheat bran | 9.0 weight parts |
| Soybean oil meal | 7.0 weight parts |
| Molasses | 2.7 weight parts |
| Calcium carbonate | 1.5 weight parts |
| Calcium phosphate | 1.1 weight parts |
| Salt | 0.5 weight parts |
| Vitamins | 0.1 weight parts |
| Minerals | 0.1 weight parts |

The beef cattles were butchered and dissectioned, and then the quality of the beef was observed. The beef of the present beef cattles had clearer red color than the comparative beef cattles. In the beef of the present beef cattles, fatts were contained in dense and marble-like states.

Lactobacillus bifidus referred to in the description and claims and used in the examples is a usual known microorganism accessible to the public without restriction.

**Claims**

1. A veterinary composition for preventing diarrhea in animals, which comprises
   (A) at least one selected from the group consisting of a vinegar, a dried powder of the flesh of a mume (Japanese apricot) fruit, a dried powder of oranges, a dried powder of tomatoes and a dried powder of strawberries, and
   (B) saccharides alone or a combination of saccharides with one or more edible organic acids.

2. A veterinary composition of claim 1 wherein a mixture of the vinegar and the dried powder of mume is used as (A).

3. A veterinary composition of claim 1 wherein the vinegar is used as (A).

4. A veterinary composition of claim 1 wherein the dried powder of mume is used as (A).

5. A veterinary composition of claims 1 to 4 wherein saccharides are used as (B).

6. A veterinary composition of claims 1 to 4 wherein saccharides in combination with one or more of the edible organic acids are used as (B).

7. A veterinary composition of claims 1 to 6 wherein the edible organic acid is at least one selected from the group consisting of citric acid, malic acid, fumaric acid, formic acid, succinic acid, tartaric acid and lactic acid.

8. A veterinary composition of claims 1 to 7 which further comprises a base feed stuff sach as corns, wheat bran, wheat, wheat flour, soybean meal, milo, fish meal, fish powder, their mixture or the like.

9. A veterinary composition for preventing diarrhea in animals, which comprises
   (A) at least one selected from the group consisting of a vinegar, a dried powder of the flesh of a mume (Japanese apricot) fruit, a dried powder of oranges, a dried powder of tomatoes and a dried powder of strawberries,
   (B) saccharides alone or a combination of saccharides with one or more edible organic acids and
   (C) Lactobacillus bifidus.

10. A veterinary composition of claim 9 wherein a mixture of the vinegar and the dried powder of mume is used as (A).

11. A veterinary composition of claim 9 wherein the vinegar is used as (A).

12. A veterinary composition of claim 9 wherein the dried powder of mume is used as (A).

13. A veterinary composition of claims 9 to 12 wherein saccharides are used as (B).

14. A veterinary composition of claims 9 to 12 wherein saccharides in combination with the one ore more edible organic acids are used as (B).

15. A veterinary composition of claims 9 to 14 wherein the edible organic acid is at least one selected from the group consisting of citric acid, malic acid, fumaric acid, formic acid, succinic acid, tartaric acid and lactic acid.

16. A veterinary composition of claims 9 to 15 which further comprises a base feed stuff such as corns, wheat bran, wheat, wheat flour, soybean meal, milo, fish meal, fish powder, their mixture or the like.

17. Use of a mixture which comprises

(A) at least one selected from the group consisting of a vinegar, a dried powder of the flesh of a mume (Japanese apricot) fruit, a dried powder of oranges, a dried powder of tomatoes and a dried powder of strawberries, and
(B) saccharides alone or a combination of saccharides with one or more edible organic acids
for the preparation of veterinary compositions for preventing diarrhea in animals.

**Patentansprüche**

1. Tierarzneiliche Zusammensetzung zur Verhütung von Diarrhöe bei Tieren, die umfaßt
   (A) wenigstens ein Bestandteil, ausgewählt aus der Gruppe, die aus Essig, einem getrockneten Pulver des Fleisches der Mume-Frucht (japanische Aprikose), einem getrockneten Pulver von Orangen, einem getrockneten Pulver von Tomaten und einem getrockneten Pulver von Erdbeeren besteht, und
   (B) Saccharide allein oder eine Kombination von Sacchariden mit einer oder mehreren eßbaren organischen Säuren.

2. Tierarzneiliche Zusammensetzung nach Anspruch 1, worin ein Gemisch von Essig und dem getrockneten Pulver der Mume als (A) verwendet wird.

3. Tierarzneiliche Zusammensetzung nach Anspruch 1, worin der Essig als (A) verwendet wird.

4. Tierarzneiliche Zusammensetzung nach Anspruch 1, worin das getrocknete Pulver der Mume als (A) verwendet wird.

5. Tierarzneiliche Zusammensetzung nach Anspruch 1 bis 4, worin Saccharide als (B) verwendet werden.

6. Tierarzneiliche Zusammensetzung nach Anspruch 1 bis 4, worin Saccharide in Kombination mit einer oder mehreren der eßbaren organischen Säuren als (B) verwendet werden.

7. Tierarzneiliche Zusammensetzung nach Anspruch 1 bis 6, worin die eßbare organische Säure wenigstens eine ist, die ausgewählt ist aus der Gruppe, bestehend aus Citronensäure, Äpfelsäure, Fumarsäure, Ameisensäure, Succinsäure, Weinsäure und Milchsäure.

8. Tierarzneiliche Zusammensetzung nach Anspruch 1 bis 7, die weiterhin ein Basisnahrungsmittel enthält, wie Mais, Weizenkleie, Weizen, Weizenmehl, Sojabohnenmehl, Mohrenhirse, Fischmehl, Fischpulver, deren Gemische oder ähnliches.

9. Tierarzneiliche Zusammensetzung zur Verhütung von Diarrhöe bei Tieren, die umfaßt
   (A) wenigstens ein Bestandteil, ausgewählt aus der Gruppe, die aus Essig, einem getrockneten Pulver des Fleisches der Mume-Frucht (japanische Aprikose), einem getrockneten Pulver von Orangen, einem getrockneten Pulver von Tomaten und einem getrockneten Pulver von Erdbeeren besteht,
   (B) Saccharide allein oder eine Kombination von Sacchariden mit einer oder mehreren eßbaren organischen Säuren und
   (C) Lactobacillus bifidus.

10. Tierarzneiliche Zusammensetzung nach Anspruch 9, worin ein Gemisch von Essig und dem getrockneten Pulver der Mume als (A) verwendet wird.

11. Tierarzneiliche Zusammensetzung nach Anspruch 9, worin der Essig als (A) verwendet wird.

12. Tierarzneiliche Zusammensetzung nach Anspruch 9, worin das getrocknete Pulver der Mume als (A) verwendet wird.

13. Tierarzneiliche Zusammensetzung nach Anspruch 9 bis 12, worin Saccharide als (B) verwendet werden.

14. Tierarzneiliche Zusammensetzung nach Anspruch 9 bis 12, worin Saccharide in Kombination mit einer oder mehreren eßbaren organischen Säuren als (B) verwendet werden.

**15.** Tierarzneiliche Zusammensetzung nach Anspruch 9 bis 14, worin die eßbare organische Säure wenigstens eine ist, die ausgewählt ist aus der Gruppe, bestehend aus Citronensäure, Äpfelsäure, Fumarsäure, Ameisensäure, Succinsäure, Weinsäure und Milchsäure.

**16.** Tierarzneiliche Zusammensetzung nach Anspruch 9 bis 15, die weiterhin ein Basisnahrungsmittel enthält, wie Mais, Weizenkleie, Weizen, Weizenmehl, Sojabohnenmehl, Mohrenhirse, Fischmehl, Fischpulver, deren Gemische oder ähnliches.

**17.** Verwendung eines Gemisches, das umfaßt
(A) wenigstens ein Bestandteil, ausgewählt aus der Gruppe, die aus Essig, einem getrockneten Pulver des Fleisches der Mume-Frucht (japanische Aprikose), einem getrockneten Pulver von Orangen, einem getrockneten Pulver von Tomaten und einem getrockneten Pulver von Erdbeeren besteht, und
(B) Saccharide allein oder eine Kombination von Sacchariden mit einer oder mehreren eßbaren organischen Säuren
zur Herstellung von tierarzneilichen Zusammensetzungen zur Verhütung von Diarrhöe bei Tieren.

**Revendications**

**1.** Composition vétérinaire pour la prévention de la diarrhée chez les animaux qui comprend
(A) au moins une substance choisie dans le groupe constitué d'un vinaigre, une poudre séchée de chair de mume (abricot japonais), une poudre séchée d'oranges, une poudre séchée de tomates et une poudre séchée de fraises et
(B) des saccharides seuls ou une combinaison de saccharides avec un ou plusieurs acides organiques comestibles.

**2.** Composition vétérinaire de la revendication 1 dans laquelle on utilise un mélange de vinaigre et de poudre séchée de mume comme composant (A).

**3.** Composition vétérinaire de la revendication 1 dans laquelle on utilise le vinaigre comme composant (A).

**4.** Composition vétérinaire de la revendication 1 dans laquelle on utilise de la poudre séchée de mume comme composant (A).

**5.** Composition vétérinaire des revendications 1 à 4 dans laquelle on utilise des saccharides comme composant (B).

**6.** Composition vétérinaire des revendications 1 à 4 dans laquelle on utilise des saccharides en combinaison avec un ou plusieurs acides organiques comestibles comme composant (B).

**7.** Composition vétérinaire des revendications 1 à 6, dans laquelle l'acide organique comestible est au moins choisi dans le groupe constitué de l'acide citrique, acide maléique, acide fumarique, acide formique, acide succinique, acide tartrique et acide lactique.

**8.** Composition vétérinaire des revendications 1 à 7 qui comprend en outre un aliment de base tel que maïs, son, blé, farine de blé, farine de soja, milo, farine de poisson, poudre de poisson, leur mélange ou analogue.

**9.** Composition vétérinaire pour la prévention de la diarrhée chez les animaux qui comprend
(A) au moins une substance choisie dans le groupe constitué d'un vinaigre, une poudre séchée de chair de mume (abricot japonais), une poudre séchée d'orange, une poudre séchée de tomates et une poudre séchée de fraises,
(B) des saccharides seuls ou une combinaison de saccharides avec un ou plusieurs acides organiques comestibles et
(C) Lactobacillus bifidus.

**10.** Composition vétérinaire de la revendication 9, dans laquelle on utilise un mélange de vinaigre et de poudre séchée de mume comme composant (A).

**11.** Composition vétérinaire de la revendication 9 dans laquelle on utilise le vinaigre comme composant (A).

**12.** Composition vétérinaire de la revendication 9, dans laquelle on utilise la poudre séchée de mume comme composant (A).

**13.** Composition vétérinaire des revendications 9 à 12 dans laquelle on utilise des saccharides comme composant (B).

**14.** Composition vétérinaire des revendications 9 à 12 dans laquelle on utilise des saccharides en combinaison avec un ou plusieurs acides organiques comestibles comme composant (B).

**15.** Composition vétérinaire des revendications 9 à 14 dans laquelle l'acide organique comestible est au moins choisi dans le groupe constitué de l'acide citrique, acide maléique, acide fumarique, acide formique, acide succinique, acide tartrique et acide lactique.

**16.** Composition vétérinaire des revendications 9 à 15 qui comprend en outre un élément de base tel que maïs, son, farine, blé, farine de blé, farine de soja, milo, farine de poisson, poudre de poisson, leur mélange ou analogue.

**17.** Utilisation d'un mélange qui comprend
(A) au moins une substance choisie dans le groupe constitué d'un vinaigre, une poudre séchée de chair de mume (abricot japonais), une poudre séchée d'oranges, une poudre séchée de tomates et une poudre séchée de fraises et
(B) des saccharides seuls ou une combinaison de saccharides avec un ou plusieurs acides organiques comestibles pour préparer une composition vétérinaire de prévention de la diarrhée chez les animaux.